# EUROPEAN PATENT APPLICATION

(11) **EP 4 539 017 A1**
(43) Date of publication of application: **16.04.2025**
(21) Application number: 24202380.2
(22) Date of filing: 25.09.2024
(51) Int. Cl.: G08G 5/21, G01S 13/934, G08G 5/22, G08G 5/26, G08G 5/51, G08G 5/54, G08G 5/72, G08G 5/80, G06V 10/70, G06V 10/774, G06V 10/82, G06V 20/17, G06V 20/58

(54) **RUNWAY INCURSION DETECTION**

(30) Priority: 11.10.2023 US 202318484855
(71) Applicant: The Boeing Company, Arlington, VA 22202 (US)
(72) Inventor: STOCK, Zachary P., Arlington, 22202 (US); GILLESPIE, Hannah G., Arlington, 22202 (US); EVANS, Nick S., Arlington, 22202 (US)
(74) Representative: Morrall, Jonathan Ian McLachlan

(57) **Abstract**

An airport object location system comprising a number of vehicle location units, a sensor system, and a model generator. The number of vehicle location units is connected to a number of vehicles. The number of vehicle location units generate vehicle location information for the number of vehicles in an area including an operations surface at an airport and vehicle timestamps for the vehicle location information. The sensor system is connected to a reference vehicle. The sensor system is configured to generate sensor data for the area, wherein reference timestamps and reference location information are associated with the sensor data. The model generator is configured to correlate the vehicle location information for the vehicles with the sensor data using the vehicle timestamps, the reference location information, and the reference timestamps to form a dataset.

## Description

### BACKGROUND INFORMATION

### 1. Field:

The present disclosure relates generally to aircraft and in particular, to detecting runway incursions.

### 2. Background:

Runway incursions can occur when an object enters a runway without authorization. A runway incursion can be any occurrence at an airport involving the incorrect presence of an aircraft, vehicle or person on a protected area of a surface designated for the landing and take-off of aircraft. Runway incursions can result in confusion and delays airport operations.

An airport surface detection system can alert traffic controllers of potential runway conflicts by providing detailed coverage of movement on runways and taxiways. Data can be collected by different sensors. These sensors can include, for example, electro-optical sensor systems, infrared imaging systems, induction coils, microwave position sensor, a radar system, automatic dependent surveillance broadcast (ADS-B) and other types of sensors and systems that can be used to obtain location information for different objects. The location and movement of aircraft and vehicles can be displayed on a map of the airport. This display can provide situational awareness with respect to potential runway incursions.

A radar system provides a display of the layout with aircraft and vehicle movements on runways and taxiways. Electro-optical sensor systems can also be used to provide a video such that vehicles and other moving objects can be seen at the airport. These and other types of perception detection systems can inform pilots and other operators as to whether a runway is clear.

### SUMMARY

An embodiment of the present disclosure provides an airport object location system comprising a number of vehicle location units, an electro-optical sensor system, and the model generator. The number of vehicle location units is connected to a number of vehicles. The number of vehicle location units generate vehicle location information for the number of vehicles in an area including an operations surface at an airport and vehicle timestamps for the vehicle location information. The electro-optical sensor system is connected to an aircraft. The electro-optical sensor system is configured to generate a video comprising frames of the area. The reference timestamps and reference location information are associated with the frames in the video. The model generator is configured to correlate the vehicle location information for the vehicles with the frames in the video using the vehicle timestamps, the reference location information, and the reference timestamps to form a dataset.

Another embodiment of the present disclosure provides an airport object location system comprising a number of vehicle location units, a sensor system, and a model generator. The number of vehicle location units is connected to a number of vehicles. The number of vehicle location units generate vehicle location information for the number of vehicles in an area including an operations surface at an airport and vehicle timestamps for the vehicle location information. The sensor system is connected to a reference vehicle. The sensor system is configured to generate sensor data for the area. The reference timestamps and reference location information are associated with the sensor data. The model generator is configured to correlate the vehicle location information for the vehicles with the sensor data using the vehicle timestamps, the reference location information, and the reference timestamps to form a dataset.

Yet another embodiment of the present disclosure provides a method for detecting objects at an airport. Vehicle location information is generated for the number of vehicles in an area including an operations surface at an airport and vehicle timestamps for the vehicle location information using a number of vehicle location units connected to the vehicles. Sensor data is generated for the area using a sensor system connected to a reference vehicle. Reference timestamps and reference location information are associated to the sensor data. The reference location information is for the reference vehicle. The vehicle location information for the vehicles is correlated with the sensor data using the vehicle timestamps, the reference location information, and the reference timestamps to form a dataset.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of incursion detection in accordance with an illustrative embodiment;
**Figure 2** is an illustration of a block diagram of an object detection environment in accordance with an illustrative embodiment;
**Figure 3** is an illustration of sensor systems in sensor data in accordance with an illustrative embodiment;
**Figure 4** is an illustration of a location generation unit in accordance with an illustrative embodiment;
**Figure 5** is an illustration of a location generation unit in accordance with an illustrative embodiment;
**Figure 6** is an illustration of a reference location unit in accordance with an illustrative embodiment;
**Figure 7** is another illustration of a reference location unit in accordance with an illustrative embodiment;
**Figure 8** is an illustration of an antenna system connected to a vehicle in accordance with an illustrative embodiment;
**Figure 9** is an illustration of an antenna system in accordance with an illustrative embodiment;
**Figure 10** is an illustration of a flowchart of a process for detecting objects in accordance with an illustrative embodiment;
**Figure 11** is an illustration of a flowchart of a process for training the machine learning model in accordance with an illustrative embodiment;
**Figure 12** is an illustration of a flowchart of a process for assessing and encouraging in accordance with an illustrative embodiment;
**Figure 13** is an illustration of a flowchart of a process for assessing and incursion in accordance with an illustrative embodiment;
**Figure 14** is an illustration of a flowchart of a process for assessing and incursion in accordance with an illustrative embodiment;
**Figure 15** is an illustration of a flowchart of a process for performing an action to an incursion in accordance with an illustrative embodiment;
**Figure 16** is an illustration of a flowchart of a process for performing an action in response to an incursion in accordance with an illustrative embodiment; and
**Figure 17** is an illustration of a block diagram of a data processing system in accordance with an illustrative embodiment.

### DETAILED DESCRIPTION

The illustrative embodiments recognize and take into account one or more different considerations. Many of the reception based detection systems employ cameras, lidar, and other sensors. The systems can use machine learning models to detect intrusion by vehicles as well as other aircraft.

Training a machine learning model to detect runway incursions can be challenging. For example, obtaining desired amounts of data to train machine learning model can be more difficult than desired to obtain a desired level accuracy needed to detect incursions onto a runway.

One or more illustrative embodiments can improve at least one of the amount and quality of the training data used to train machine learning models to detect incursions. For example, in developing training data, identifying the different vehicles that may be involved in a runway incursion event is important. An aircraft may be on approach when another vehicle such as aircraft or a ground vehicle on the runway. Training data can be obtained for the location of these and other vehicles or objects. This location information includes timestamps.

In obtaining the location information, a vehicle location unit can be connected to a vehicle for generating location information. These systems can be placed on vehicles near or on the runway. In the illustrative examples, the vehicle location unit is designed to work on any ground vehicle traveling in an airport environment. These there call location units provide accurate global positioning system (GPS) data. The global positioning system data can be collected in a manner that is accurate within one meter deviation. In these examples, this global positioning system data can be integrated with real-time kinematics (RTK) to increase the accuracy of the location information for the vehicles. With real-time kinematics, the accuracy can be increased to one centimeter.

In the illustrative examples, a location data collection system collects high-fidelity "truth" GPS and heading data from a vehicle location unit connected to the vehicle and synchronizes this information temporally with the vehicle's location in the sensor systems of an approaching aircraft. In other words, the location information can be synchronized or correlated with a video generated by an approaching aircraft.

Further, a video of the runway can be used as additional information for training data in addition to the location information obtained from vehicles. For example, aircraft on approach can generate a video comprising frames with location information for the aircraft and timestamps. This video can be correlated with the location of vehicles using the timestamps.

Thus, a video from an aircraft landing at an airport includes location information that can be correlated with location information for vehicles at the airport. The video and the location information can form a dataset used to train a machine learning model to detect incursions with greater accuracy as compared to current techniques.

In one illustrative example, an airport object location system comprises a number of vehicle location units connected to a number of vehicles. The number of location generation units generate vehicle location information for the number of vehicles in an area including an operations surface at an airport and vehicle timestamps for the vehicle location information. An electro-optical sensor system is connected to an aircraft. The electro-optical sensor system is configured to generate a video comprising frames of the area, wherein reference timestamps and reference location information are associated with the frames in the video. A model generator is configured to correlate the vehicle location information for the vehicles with the frames in the video using the vehicle timestamps, the reference location information, and the reference timestamps to form a dataset. This dataset can be used to train a machine learning model to detect incursions to an operations surface such as a runway or taxiways.

In this example, timestamps are used to identify where a vehicle is present in the video. As a result, this information can be used to identify useful parts of the video for use in creating the dataset. For example, the timestamps can be correlated with location information for vehicles that also have timestamps. These timestamps can be matched to identify the parts of the video that may be used for training data.

Further, with the use of a video, the profile or visibility of the location generation units connected to the vehicles can become an issue when using video in combination with location information to train the machine learning model. In obtaining the desired location accuracy, the antenna systems may have s profile or visibility such that the machine learning model begins to learn the presence of antennas rather than the vehicles. Thus, the localization generation unit can be designed to have a visibility in the video that avoids recognition of the location generation unit by an incursion model trained using the dataset.

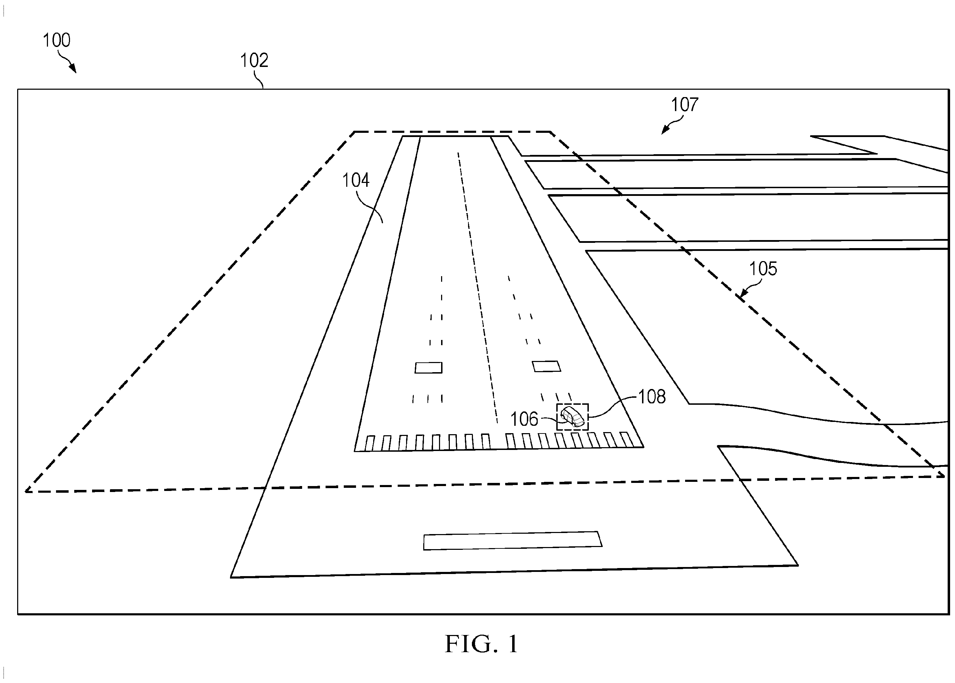

With reference now to the figures and, in particular, with reference to **Figure 1****,** an illustration of incursion detection is depicted in accordance with an illustrative embodiment. As depicted, graphical user interface **100** is an interface in which frame **102** in a video is displayed. This video is generated by an electro-optical sensor system in an aircraft during landing. The aircraft can be selected from a group comprising a commercial airplane, a passenger airplane, a cargo airplane; a tilt-rotor aircraft, a tilt wing aircraft, a vertical takeoff and landing aircraft, an unmanned aerial vehicle, a drone, an electric vertical takeoff and landing vehicle, and a personal air vehicle.

As depicted, runway **104** within area **105** is seen in frame **102** of the video. In this example, vehicle **106** is present on runway **104.** This area is an area within airport **107.**

In this example, video has been analyzed by an incursion model, which has identified the presence of vehicle **106** on runway **104.** This incursion model is a machine learning model that has been trained to detect the presence of vehicles in operation areas in an airport.

As depicted, a graphical indicator in the form of bounding box **108** has been associated with vehicle **106** to indicate incursion on runway **104** by vehicle **106.** As a result, a number of different actions can be performed in response to the indication of this incursion in the video. For example, the pilot can abort the landing. The vehicle can be moved off the runway in time for landing the aircraft. In another example, a pilot can land the aircraft on a different runway. These and other actions can be performed in response to detecting incursion on runway **104.**

As used herein, "a number of," when used with reference to items means one or more items. For example, "a number of different actions" can be one or more different actions.

The different illustrative examples can provide training data that improves the accuracy in at least one of detecting or predicting incursions into operation areas such as a runway. As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

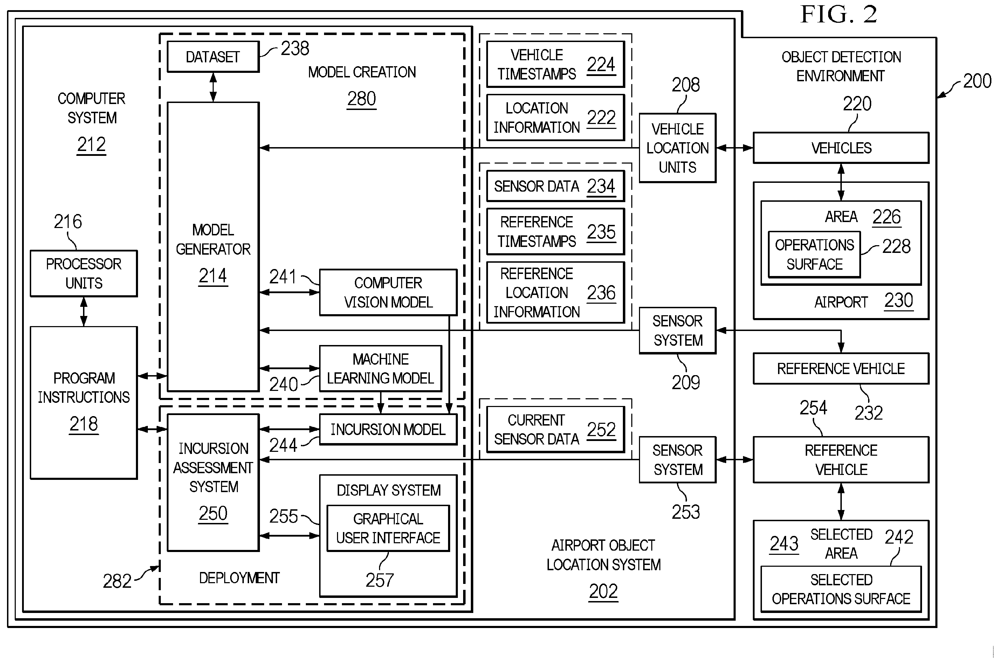

With reference now to **Figure 2****,** an illustration of a block diagram of an object detection environment is depicted in accordance with an illustrative embodiment. In this illustrative example, airport object location system **202** can be used to assess incursions into operations surfaces at airports. In this illustrative example, the assessment of incursions can be performed using incursion model **244** created using dataset **238.** The assessment can include at least one of detecting an incursion or predicting that an incursion will occur.

In this illustrative example, airport object location system **202** comprises a number of vehicle location units **208,** a sensor system **209,** and model generator **214.**

In this illustrative example, the number of vehicle location units **208** are hardware systems that can also include software. The number of vehicle location units **208** is configured to be connected to number of vehicles **220.**

When one component is "connected" to another component, the connection is a physical connection. For example, a first component, a vehicle location unit, can be considered to be physically connected to a second component, a vehicle, by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both. In some examples, the first component can be physically connected to the second component by being located within the second component.

In one illustrative example, the number of vehicle location units **208** is removably connected to the number of vehicles **220.** In other words, the number of vehicle location student rate can be temporarily connected to the number of vehicles **220.**

When connected to the number of vehicles **220,** the number of vehicle location units **208** generate vehicle location information **222** for the number of vehicles **220** and vehicle timestamps **224** for the vehicle location information **222** for area **226** including operations surface **228** at airport **230** when the number of vehicles **220** are in area **226.** Operations surface **228** can take a number different forms. For example, operations surface **228** can be selected from a group comprising a runway, a taxiway, a ramp, a helipad, or other surface on which operations can be performed by different types of vehicles. In one example, operations surface **228** is a surface on which aircraft can operate. In other examples, operations surface **220** can be surfaces for other types of vehicles such as refueling vehicles, deicing vehicles, or other types of vehicles.

Sensor system **209** is a hardware system that can also include software. Sensor system **209** is configured to be connected to reference vehicle **232.** I

n this example, reference vehicle **232** can take a number of different forms. For example, reference vehicle **232** can be an aircraft, a ground vehicle, or some other suitable type of vehicle to which sensor system **209** can be connected.

When connected to reference vehicle **232,** sensor system **209** generates sensor data **234** for area **226.** In this example, reference timestamps **235** and reference location information **236** are associated with sensor data **234.** In this example, sensor data **234** can include data about the number of vehicles **220** detected in area **226** by sensor system **209.**

In this illustrative example, model generator **214** can be implemented in software, hardware, firmware or a combination thereof. When software is used, the operations performed by model generator **214** can be implemented in program instructions configured to run on hardware, such as a processor unit. When firmware is used, the operations performed by model generator **214** can be implemented in program instructions and data and stored in persistent memory to run on a processor unit. When hardware is employed, the hardware can include circuits that operate to perform the operations in model generator **214.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **212** is a physical hardware system and includes one or more data processing systems. When more than one data processing system is present in computer system **212,** those data processing systems are in communication with each other using a communications medium. The communications medium can be a network. The data processing systems can be selected from at least one of a computer, a server computer, a tablet computer, or some other suitable data processing system.

As depicted, computer system **212** includes a number of processor units **216** that are capable of executing program instructions **218** implementing processes in the illustrative examples. In other words, program instructions **218** are computer-readable program instructions.

As used herein, a processor unit in the number of processor units **216** is a hardware device and is comprised of hardware circuits such as those on an integrated circuit that respond to and process instructions and program code that operate a computer.

When the number of processor units **216** executes program instructions **218** for a process, the number of processor units **216** can be one or more processor units that are in the same computer or in different computers. In other words, the process can be distributed between processor units **216** on the same or different computers in computer system **212.**

Further, the number of processor units **216** can be of the same type or different types of processor units. For example, the number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, as part of model creation **280,** model generator **214** receives vehicle timestamps **224** and vehicle location information **222** from the number of vehicle location units **208.** Further, model generator **214** also receives sensor data **234,** reference timestamps **235,** in reference location information **236** from sensor system **209.**

Model generator correlates vehicle location information **222** for vehicles **220** with sensor data **234** using vehicle timestamps **224,** reference location information **222,** and reference timestamps **235** to form dataset **238.** In other words, vehicle location information **222** can be matched or associated with sensor data **234** using the timestamps.

The dataset comprises the sensor data **234,** reference location information, and vehicle location information **222** and correlation to the reference location with sensor data **234.** In these examples, this correlation of the location of vehicles **220** includes an identification of where vehicles **220** are located within the sensor data **234.**

In some illustrative examples, one or more of vehicles **220** may be located outside of the field of view of the sensor system **209.** However, the location of a vehicle outside of the field of view of sensor system **209** can still be included in dataset **238.**

In this illustrative example, vehicle location information **222** for the number of vehicles **220** and reference location information **236** for reference vehicle **232** can be used to determine the location of the number of vehicles **220** in sensor data **234.** The identification of the locations of vehicles **220** in sensor data **234** can be performed using this information with known techniques.

For example, a process such as geo-referencing or geo-tagging can be used. The spatial relationship between the location of sensor system **209** connected to a vehicle can be established using vehicle location information **222** for the vehicle and reference location information **236** for sensor system **209.** The special relationship can include determining the relative position, orientation, and distance between the sensor system **209** and the vehicle at the time sensor data **234** was generated. This correlation can be made using vehicle timestamps **224** for the vehicle and reference timestamps **235** for sensor system **209.**

Once this relationship is determined, the location of the vehicle can be located in sensor data **234.** For example, sensor data **234** is a frame of data such as an image, a transformation matrix or algorithm that can be used to determine the location of the vehicle within sensor data **234** sensor system **209.** As a result, more accurate identification and location of vehicles can be made with respect to the presence of those vehicles in sensor data **234** in a geospatial context as compared to current techniques.

Thus, the location of the number of vehicles **220** in sensor data **234** can be accurately correlated with the use of vehicle timestamps **224,** vehicle location information **222,** reference timestamps **235,** and reference location information **236.** This correlation using location information and timestamps generate increased accuracy in dataset **238** as compared to current techniques.

In this example, as part of model creation **280,** model generator **214** operates to create incursion model **244.** In one illustrative example, model generator **214** trains a machine learning model **240** using dataset **238.** With this example, dataset **238** is a training dataset.

For example, model generator **214** trains a machine learning model **240** to detect incursions to selected operations surface **242** using dataset **238** to form incursion model **244.** Incursion model **244** can detect incursions in selected area **243** including selected operations surface **242.** In this depicted example, selected area **243** is one of area **226** at airport **230,** a different area at airport **230,** or another area at another airport. Dataset **238** can also be used to test and validate machine learning model **240.**

In another illustrative example, model generator **214** can create computer vision model **241.** Computer vision model **241** is a mathematical model that utilizes algorithms to analyze and interpret visual information in frames in videos. This interpretation includes identifying objects and patterns within the frames. This computer vision model can be tested and validated using dataset **238.**

In another illustrative example, model generator **214** can combine machine learning model **240** and computer vision model **241.** This combination of these two types of models form incursion model **244.**

Thus, model generator **214** can create at least one of machine learning model **240** or computer vision model **241** in creating incursion model **244.** In other words, model generator **214** can create incursion model **244** by at least one of training machine learning model **240,** creating computer vision model **241,** or a combination of these two types of models.

When computer vision model **241** and machine learning model **240** are combined to form incursion model **244,** computer vision model **241** operates as a perceptual input layer that processes and extracts features from visual data such as frames. This extracted data can be input into machine learning model **240** for further analysis, pattern recognition, or decision-making.

In this example, incursion assessment system **250** can use incursion model **244** to assess incursions during deployment **282.** Incursion assessment system **250** can be software, hardware, or software and hardware within computer system **212.** In this example, incursion assessment system **250** can be implemented in program instructions **218** that can be executed by processor units **216.**

As depicted, incursion assessment system **250** can receive current sensor data **252** from sensor system **253** connected to reference vehicle **254.** Reference vehicle **254** can be an aircraft, a ground vehicle, or some other suitable type of vehicle. In this example, reference vehicle **254** is the same type of vehicle as reference vehicle **232** that generated sensor data to create dataset **238.** For example, if reference vehicle **232** is a passenger aircraft, reference vehicle **254** is also a passenger aircraft of the same make and model. Further, in these examples, sensor system **253** is the same type of sensor system as sensor system **209.** Additionally, in these examples, the location and orientation of sensor system **253** is the same as sensor system **209.**

In this illustrative example, current sensor data **252** is for selected area **243.** Current sensor data **252** is sensor data that is used to detect incursions rather than for use in training or creating models. Current sensor data **252** can be real-time sensor data. In these examples, real-time sensor data can be data that is generated as quickly as possible without intentional delays.

In this example, incursion assessment system **250** assesses an incursion into selected operations surface **242** by a vehicle using current sensor data **252** and incursion model **244.** For example, incursion assessment system **250** can perform the assessment of an incursion by detecting the incursion into selected operations surface **242** by the vehicle using current sensor data **252** and incursion model **244.** In another example, incursion assessment system **250** can perform the assessment by predicting that the incursion into the selected operations surface by the vehicle will occur using the current sensor data **252** and the incursion model **244.**

Additionally, incursion assessment system **250** can display current sensor data **252** in graphical user interface **257** on display system **255.** Display system **255** is a physical hardware system and includes one or more display devices on which graphical user interface **257** can be displayed. The display devices can include at least one of a light emitting diode (LED) display, an organic light emitting diode (OLED) display, a computer monitor, a projector, a flat panel display, a heads-up display (HUD), a head-mounted display (HMD), smart glasses, augmented reality glasses, or some other suitable device that can output information for the visual presentation of information.

Incursion assessment system **250** can associate a graphical indicator with the vehicle in current sensor data **252** displayed on display system **255** in response to detecting the incursion. The indicator can take a number different forms. For example, the graphic indicator can be selected from at least one of a bounding box, an icon, a pictogram, an ideogram, a graphic, an image, text, animation, bolding, a color, a line, an arrow, or other suitable graphic. In other words, graphical indicator can be a single graphical element or a combination of graphical elements.

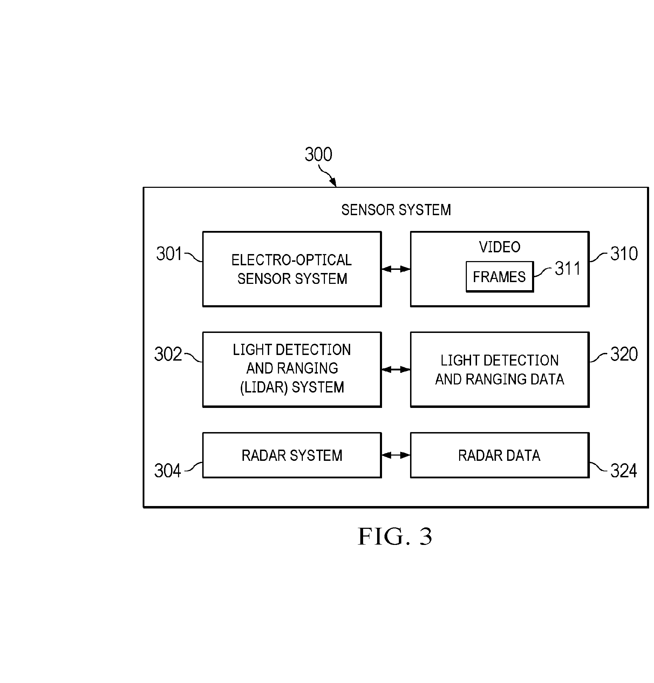

With reference next to **Figure 3****,** an illustration of sensor systems in sensor data is depicted in accordance with an illustrative embodiment. In this illustrative example, example components that can be used to implement a sensor system is depicted in accordance with an illustrative embodiment. In this illustrative example, sensor system **300** is an example of an implementation for sensor system **209** and sensor system **253** in **Figure 2****.**

As depicted, sensor system **300** can include at least one of electro-optical sensor system **301,** light detection and ranging (LIDAR) system **302,** radar system **304,** or some other type of sensor system that can detect the presence of a vehicle.

Electro-optical sensor system **301** is a hardware system that can include software. Electro-optical sensor system **301** can detect at least one of visible light, near infrared light, infrared radiation, ultraviolet light, or other types of radiation.

In this illustrative example, electro-optical sensor system **301** generates sensor data in the form of video **310,** which is comprised of frames **311.** In this example, frames **311** can also be referred to as images. In other words, a frame is a single image in a sequence of frames **311** that are images that form video **310.**

Further, the sensor data generated by electro-optical sensor system **301** can include location information such as global positioning system (GPS) data for the location of electro-optical sensor system **301.** The sensor data also includes timestamps in these illustrative examples.

As depicted, light detection and ranging system **302** is a hardware system that can include software and generates light detection and ranging data **320.** This data can take a number different forms. For example, this data can be one of point cloud data, intensity data, or return information. In these examples, light detection and ranging data **320** also includes global positioning system data for the location of light detection and ranging system **302** and timestamps.

In this illustrative example, radar system **304** is a hardware system that can also include software. Radar system **304** generates radar data **324.** In this example, radar data **324** can include different types of data such as distance data, velocity data, reflectivity data, and other types of data. In this example, radar system **304** also generates global positioning system data for the location of radar system **304** and timestamps.

In these illustrative examples, the different types of sensor data, video **310,** light detection and ranging data **320,** and radar data **324** are stored in a lossless format. The lossless format is used to increase the quality of the sensor data that is used for creating incursion models. In some illustrative examples, multiple types of sensors can be present that generate multiple types of sensor data for use in creating the dataset.

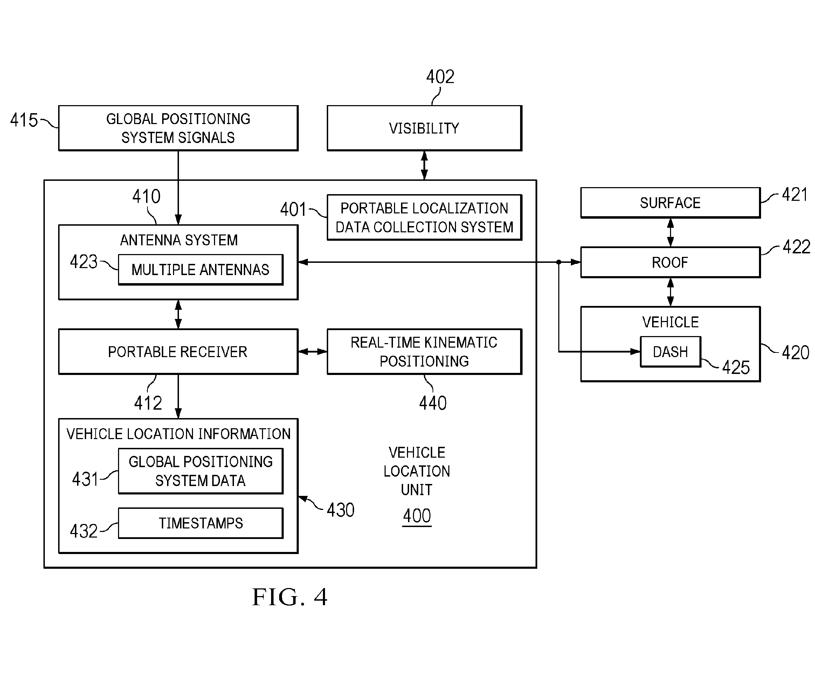

Turning next to **Figure 4****,** an illustration of a location generation unit is depicted in accordance with an illustrative embodiment. In this example, vehicle location unit **400** is an example of an implementation for vehicle location units **208** in **Figure 2****.**

In this illustrative example, vehicle location unit **400** can be a portable localization data collection system **401.** In other words, vehicle location unit **400** can be removable from one vehicle to another vehicle. In this example, vehicle location unit **400** has visibility **402** in the sensor data that avoids recognition of the vehicle location unit by an incursion model trained using the dataset.

In this illustrative example, vehicle location unit **400** comprises a number of different components. As depicted, vehicle location unit **400** includes antenna system **410** and portable receiver **412.**

In this example, antenna system **410** receives global positioning system signals. Further, this antenna system is configured to be removably attached to vehicle **420.** Further, in reducing visibility in a video, antenna system **410** when connected to roof **422** can have a height of 8 inches or less from surface **421** of roof **422** of vehicle **420.** In another illustrative example, a height can be 6 inches or less from surface **421** of roof **422.** In one illustrative example, antenna system **410** can be comprised of multiple antennas **423.** These multiple antennas can be removably connected to roof **422.** By increasing the number of antenna, increased accuracy can be obtained in generating vehicle location information **430.**

In another illustrative example, visibility **402** can be reduced by connecting antenna system **410** to dash **425** of vehicle **420.** In other words, antenna system **410** can be placed where visibility to satellites is present through the windshield in vehicle **420.**

In this illustrative example, portable receiver **412** is connected to the antenna system **410.** Portable receiver **412** processes global positioning system signals **415** received by the antenna system **410** to generate the vehicle location information **430** in a form of global positioning system data **431** and timestamps **432.**

In another illustrative example, vehicle location unit **400** can also include real-time kinematic positioning **440.** In this example, an additional antenna can be present in antenna system **410** that provides an internet connection to a reference station. The reference station also receives global positioning system signals and can provide real-time corrections.

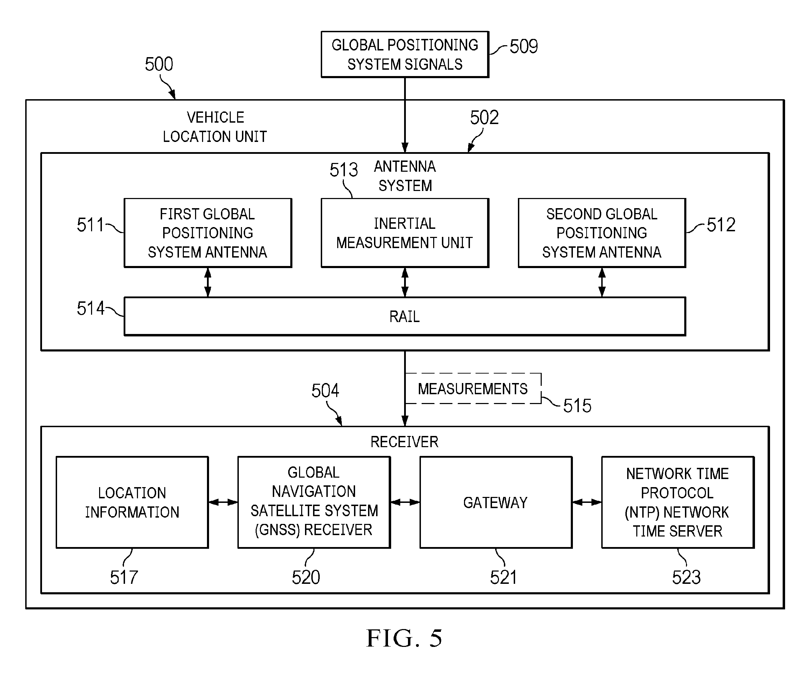

With reference now to **Figure 5****,** another illustration of a location generation unit is depicted in accordance with an illustrative embodiment. In this example, vehicle location unit **500** is another illustrative example of an implementation for vehicle location units **208** in **Figure 2****.**

In this illustrative example, vehicle location unit **500** comprises antenna system **502** and receiver **504,** which are examples of an implementation for antenna system **410** and portable receiver **412** in **Figure 4****.**

In this example, antenna system **502** comprises first global positioning system (GPS) antenna **511,** second global positioning system (GPS) antenna **512,** inertial measurement unit (IMU) **513,** and rail **514.**

In this example, rail **514** is a structural component. First global positioning system antenna **511,** second global positioning system antenna **512,** and inertial measurement unit **513** are connected to rail **514.** Further, rail **514** is designed to be connected to the roof of the vehicle in this example. This connection can be made using various components such as suction cups, magnetic mounts, clamps, brackets, attachment farms, straps, and other suitable components.

First global positioning system antenna **511** and second global positioning system antenna **512** are hardware components that operate to receive global positioning system signals **509** from satellites. Inertial measurement unit **513** is a physical sensor device that can measure location information about an object to which this device is connected to. Inertial measurement unit **513** can include sensors such as accelerometers and gyroscopes. This type of sensor can measure acceleration, orientation, angular velocity, and other information. This information can be used to determine the location of an object in three-dimensional space.

In this illustrative example, measurements **515** made by first global positioning system antenna **511,** second global positioning system antenna **512,** and inertial measurement unit **513** are sent to receiver **504** and are processed to generate location information **517.** This location information generated by receiver **504** includes location and timestamps. The location can be in three-dimensional coordinates and can include orientation. In some examples, a speed or velocity can also be included in the location information.

In this illustrative example, receiver **504** comprises a number of different hardware components. As depicted, receiver **504** includes global navigation satellite system (GNSS) receiver **520,** gateway **521,** and network time protocol (NTP) network time server **523.**

In this example, global navigation satellite system (GNSS) receiver **520** uses signals in measurements **515** for multiple satellites to determine a three-dimensional position. Additionally, this component can also determine velocity and timing information.

Further, in one illustrative example, this receiver can also implement real-time kinematics (RTK). This feature is used by global navigation satellite system (GNSS) receiver **520** to increase the accuracy in determining the location of the vehicle to which vehicle location unit **500** is connected.

Gateway **521** is a hardware device that provides a connection to other networks or devices. This connection can be used to transmit information such as location information **517.**

In this example, network time protocol (NTP) network time server **523** is a hardware device that operates as a time server. This component provides adequate time information to other devices within receiver **504** such as global navigation satellite system (GNSS) receiver **520.**

Thus, one or more technical solutions are present in one or more illustrative examples that overcome a technical problem with generating training data to train machine learning models to assess incursions. This assessment can include at least one of detecting an incursion or predicting that an incursion will occur into an operations surface at an airport. In the illustrative examples, location information is collected from vehicles in an area that includes the operation surface. Timestamps can be associated with the location information.

Further, sensor data such as a video can be generated by reference vehicle. This reference vehicle can be an aircraft in flight, an aircraft on the ground, a ground vehicle, or other suitable vehicle. The video includes location information for the reference vehicle and timestamps.

The location information with the timestamps from the vehicles can be correlated to the video using the location information and the timestamps for the video. This correlated information can be used as training data for machine learning model to generate an incursion model processing incursions. The correlated information can also be used to test and validate computer vision models.

Further, the illustrative examples use vehicle location units that have a visibility that avoids the machine learning model learning the presence of the antenna system instead of the vehicle. Further, this visibility also includes avoiding the machine learning model learning that the vehicle must include the presence of the antenna system. In other words, visibility of the vehicle location units is such that the machine learning model recognizes the presence of vehicles even without antenna systems. This visibility can be such that computer vision models also do not detect the antenna system instead of the vehicle or require the presence of the antenna system to detect vehicle.

This incursion model can then be used by an incursion assessment system to assess an incursion. At least one of predicting or detecting an incursion and an operation area can be used to perform a number of actions. For example, the vehicle generating the video can move to avoid any vehicles detected or predicted to enter an operations surface. In another illustrative example, vehicles in or predicted to enter an operations surface can be moved to leave the operations surface or avoid the operations surface.

Computer system **212** can be configured to perform at least one of the steps, operations, or actions described in the different illustrative examples using software, hardware, firmware or a combination thereof. As a result, computer system **212** operates as a special purpose computer system in which model generator **214** in computer system **212** enables detecting objects at an airport. In particular, at least one of model generator **214** or incursion assessment system **250** transforms computer system **212** into a special purpose computer system as compared to currently available general computer systems that do not have model generator **214.**

In the illustrative example, the use of model generator **214** in computer system **212** integrates processes into a practical application for detecting objects such as vehicles that may be located or predicted to enter an operation area.

The illustration of object detection environment **200** in **Figures 2-5** is not meant to imply physical or architectural limitations to the manner in which an illustrative embodiment may be implemented.

Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, reference location units can be connected to other objects to generate dataset **238.** For example, reference location units can be carried by people, carts, or other objects that move or can be moved.

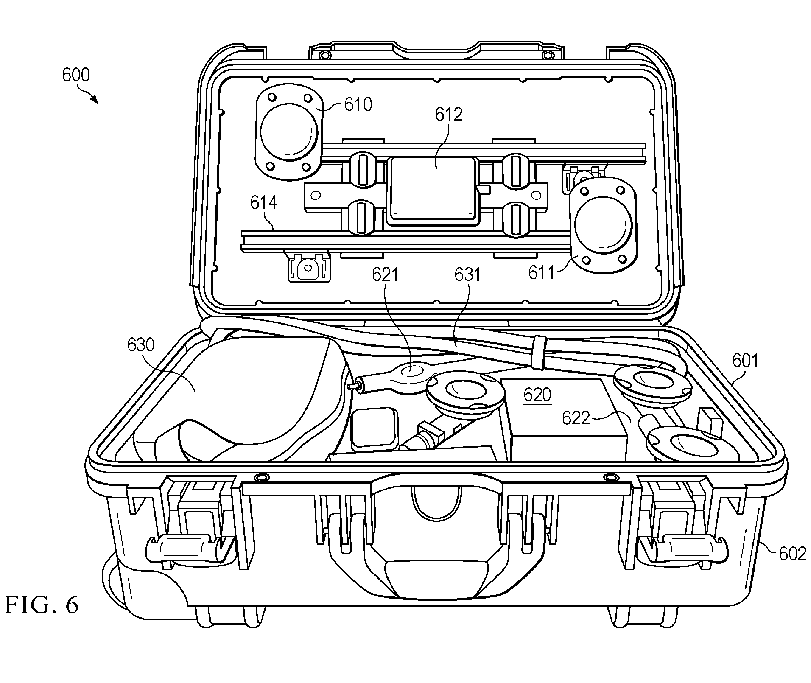

Turning now to **Figure 6****,** an illustration of a reference location unit is depicted in accordance with an illustrative embodiment. In this illustrative example, reference location unit **600** is an example implementation of vehicle location unit **400** in **Figure 4** and vehicle location unit **500** in **Figure 5****.**

In this example, case **601** is a plastic case that houses components for reference location unit **600.** Case **601** provides portability and transporting reference location unit **600.** In other example, case **601** can be comprised of other materials such as a metal, aluminum, a composite, or other suitable material.

In this example, GPS antenna **610,** GPS antenna **611,** and IMU **612** are connected to rail **614** within case **601.** The rail **614** is configured to fold and fit within case **601.** Additionally, NTP network time server **620,** GNSS receiver **621,** and gateway **622** are also located within case **601.**

Other components can also be present in case **601.** For example, case **601** in this also includes toolkit **630** and cable **631.** In this example, connectors are present on a panel (not shown) on side **602** of case **601.** A fane is an example of another component that can be included in case **601.** The fan can provide cooling for other components within case **601.** Further, in these illustrative examples, case **601** is a waterproof or water resistant case.

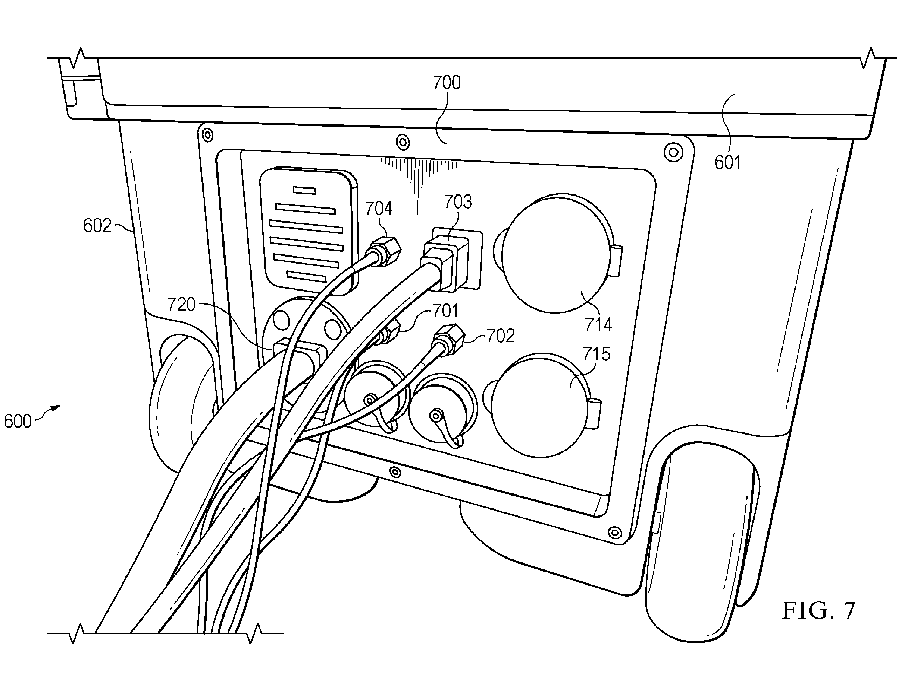

Turning next to **Figure 7****,** another illustration of a reference location unit is depicted in accordance with an illustrative embodiment. In the illustrative examples, the same reference numeral may be used in more than one figure. This reuse of a reference numeral in different figures represents the same element in the different figures.

In this example, in view of side **602** in case **601** is shown for reference location unit **600.** In this view, panel **700** on side **602** provides connections or components such as GPS antenna **610,** GPS antenna **611,** and IMU **612** in **Figure 6** when those components are deployed and connected to the roof of the vehicle.

As depicted, panel **700** includes ANTI **701** which is connected to GPS antenna **610,** ANT **702** which is connected to GPS antenna **611,** and IMU **703** which is connected to IMU **612.** Further, panel **700** also includes NTP ANT **704** which provides antenna connection for NTP network time server **620.**

Further, power connector **720** provides a connection to a power source. The power source can be a battery, a generator, power inverter in the vehicle, or other power source. Panel **700** also includes other connections such as universal serial bus (USB) ports **714** and display port **715.**

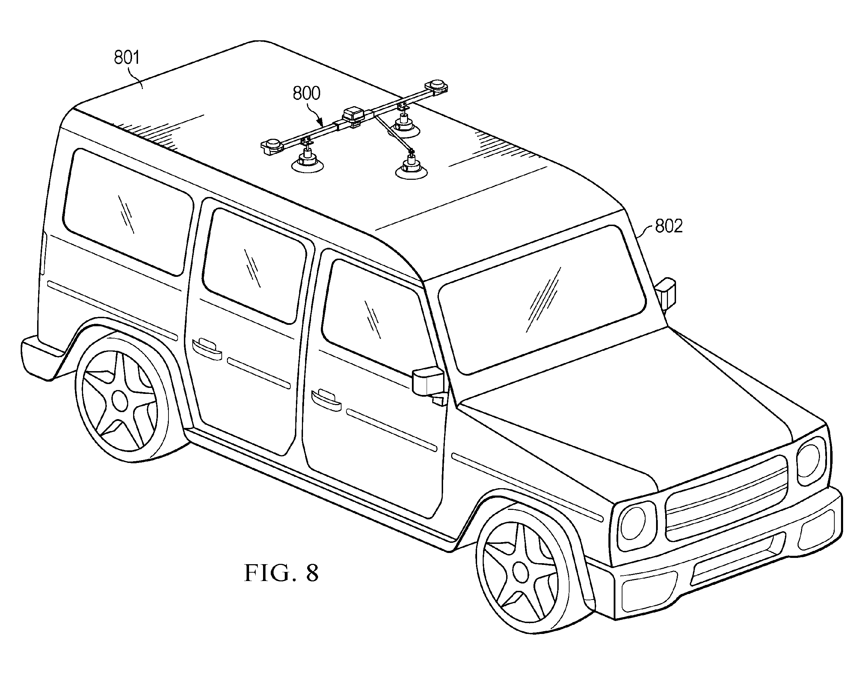

With reference now to **Figure 8****,** an illustration of an antenna system connected to a vehicle is depicted in accordance with an illustrative embodiment. In this illustrative example, antenna system **800** is connected to roof **801** of vehicle **802.**

As depicted in this example, antenna system **800** has dimensions that reduce visibility of antenna system **800** in images generated of vehicle **802** for a dataset. This visibility of antenna system **800** is such that the machine learning model does not learn to recognize antenna system **800** instead of vehicle **802** or learn to recognize that vehicle **802** only when antenna system **800** is present.

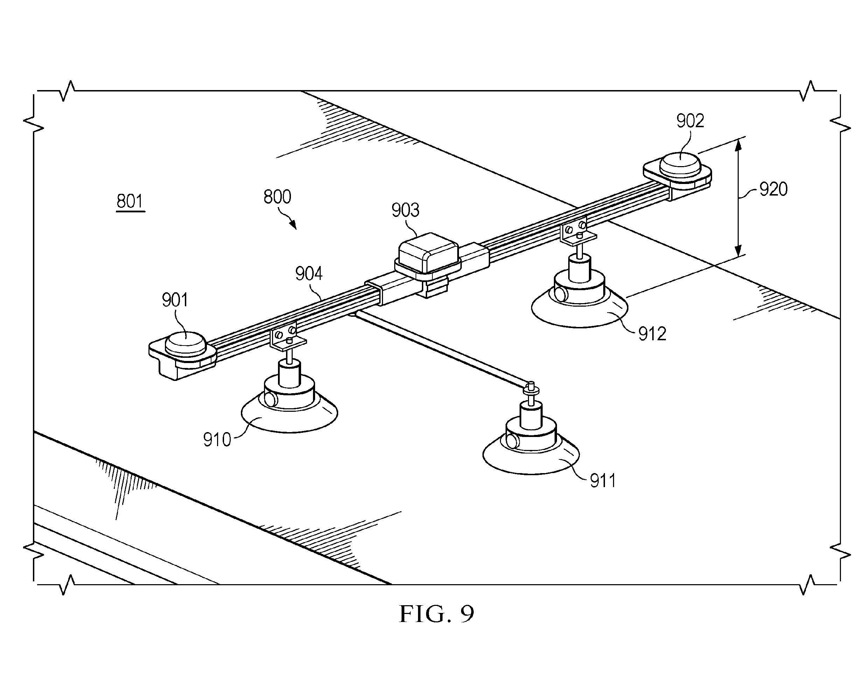

Turning now to **Figure 9****,** an illustration antenna system is depicted in accordance with an illustrative embodiment. A more detailed view of antenna system **800** is depicted. In this example, antenna system **800** comprises GPS antenna **901,** GPS antenna **902,** and IMU **903,** which are connected to rail **904.**

In this example, rail **904** is connected to roof **801** in **Figure 8** using magnetic mount **910,** magnetic mount **911,** and magnetic mount **912.** Other types of connectors can be used in other examples. For example, suction cups can be used in place of the magnetic mount depicted in this figure.

The illustration of antenna system **800** is an example of one antenna system used in vehicle location units and is not intended to limit the manner in which other antenna systems can be implemented. For example, other antenna systems can have other numbers of GPS antennas. For example, one or three GPS antennas can be used in place of the two GPS antennas depicted in this figure. Further, other components are present but not shown in this example. For example, cables connecting GPS antenna **901,** GPS antenna **902,** and IMU **903** to a receiver are not shown in this example.

In this illustrative example, antenna system **800** has height **920** that is 6 inches or less. In another illustrative example, height **920** can be 8 inches or less. A higher height can be used when other components are located on roof **801** such as a roof rack or rails.

In the different illustrative examples, height **920** is selected such that visibility of antenna system **800** results in in machine learning model recognizes vehicle and not the antennas in the antenna systems. In these examples, the height is selected such that the visibility does not result in the machine learning model recognizing antenna system **800** or only recognizing vehicle **802** when antenna system **800** is present.

Further, other design changes can be made to antenna system **800** to reduce visibility within a video generated for the dataset. For example, the color of antenna system **800** can be selected to be similar to the color of vehicle **802.** In another example, antenna system **800** can be installed in the dash of vehicle **802** such that visibility to a sky view is present for the GPS antennas. In yet another example, antenna system **800** can be attached to a side of vehicle **802** where a sky view is still present.

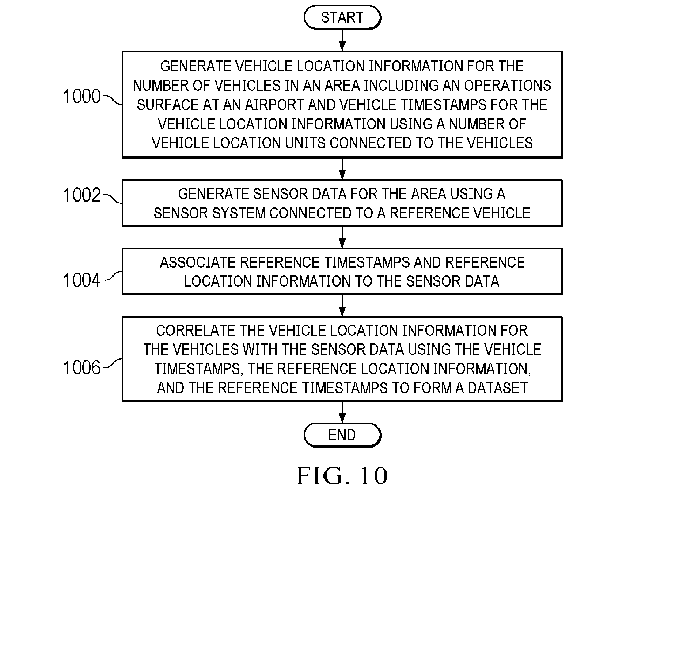

Turning next to **Figure 10****,** an illustration of a flowchart of a process for detecting objects is depicted in accordance with an illustrative embodiment. The process in **Figure 10** can be implemented in hardware, software, or both. When implemented in software, the process can take the form of program instructions that are run by one of more processor units located in one or more hardware devices in one or more computer systems. For example, the process can be implemented in model generator **214** in computer system **212** in **Figure 2****.**

The process generates vehicle location information for the number of vehicles in an area including an operations surface at an airport and vehicle timestamps for the vehicle location information using a number of vehicle location units connected to the vehicles (operation **1000**). The process generates sensor data for the area using a sensor system connected to a reference vehicle (operation **1002**)**.**

The process associates reference timestamps and reference location information to the sensor data (operation **1004**). In operation **1004,** the reference location information is for location of the reference vehicle and in particular the reference location information is for the sensor system connected to the reference vehicle.

The process correlates the vehicle location information for the vehicles with the sensor data using the vehicle timestamps, the reference location information, and the reference timestamps to form a dataset (operation **1006**). The process terminates thereafter.

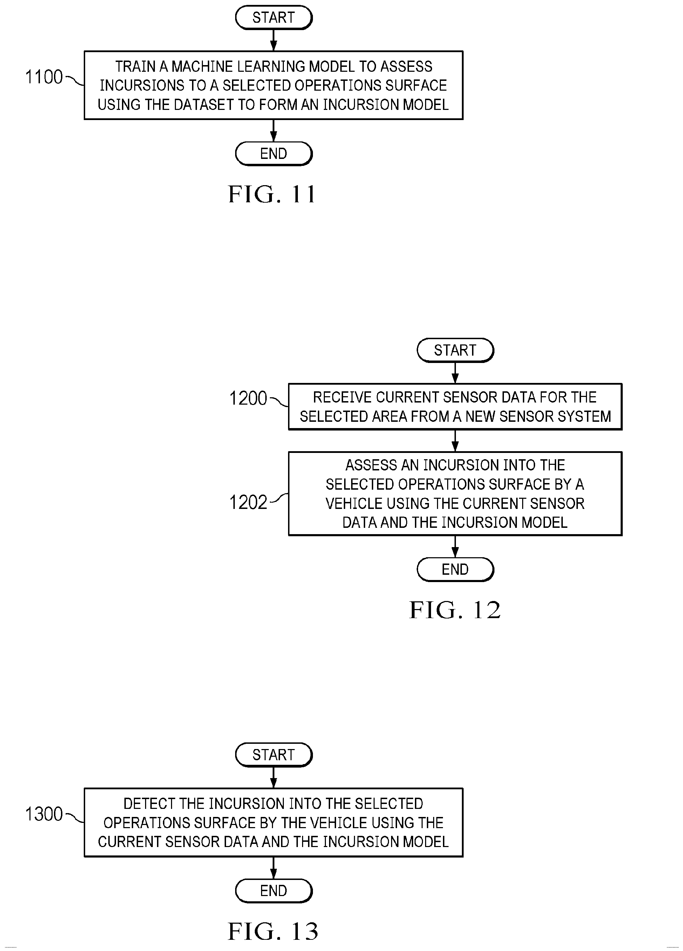

Turning next to **Figure 11****,** an illustration of a flowchart of a process for training the machine learning model is depicted in accordance with an illustrative embodiment. The process in this figure is an example of an additional operation that can form with the operations in **Figure 10****.**

The process trains a machine learning model to assess incursions to a selected operations surface using the dataset to form an incursion model (operation **1100**). The process terminates thereafter. In operation **1100,** incursion model assesses incursions by vehicles in a selected area including the selected operations surface.

Next in **Figure 12****,** an illustration of a flowchart of a process for assessing and encouraging is depicted in accordance with an illustrative embodiment. The process in **Figure 12** can be implemented in hardware, software, or both. When implemented in software, the process can take the form of program instructions that are run by one of more processor units located in one or more hardware devices in one or more computer systems. For example, the process can be implemented in incursion assessment system **250** in computer system **212** in **Figure 2****.**

The process receives current sensor data for the selected area from a new sensor system (operation **1200**). The process assesses an incursion into the selected operations surface by a vehicle using the current sensor data and the incursion model (operation **1202**). The process terminates thereafter.

With reference now to **Figure 13****,** an illustration of a flowchart of a process for assessing and incursion is depicted in accordance with an illustrative embodiment. The process in this figure is an example of an implementation for operation **1202** in **Figure 12****.**

The process detects the incursion into the selected operations surface by the vehicle using the current sensor data and the incursion model (operation **1300**). The process terminates thereafter.

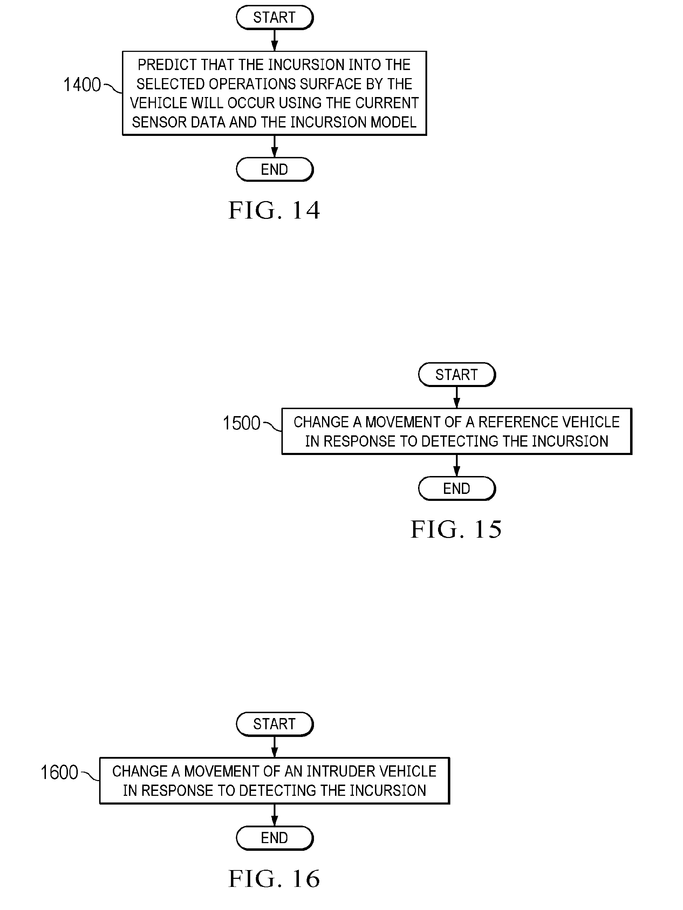

Turning to **Figure 14****,** an illustration of a flowchart of a process for assessing and incursion is depicted in accordance with an illustrative embodiment. The process in this figure is an example of an implementation for operation **1202** in **Figure 12****.**

The process predicts that the incursion into the selected operations surface by the vehicle will occur using the current sensor data and the incursion model (operation **1400**). The process terminates thereafter.

With reference to **Figure 15****,** an illustration of a flowchart of a process for performing an action in response to an incursion is depicted in accordance with an illustrative embodiment. This process can be implemented by a vehicle involved in the incursion. This vehicle can be a reference vehicle that generates the sensor data or video. For example, the process can be implemented in an aircraft that is landing.

The process changes a movement of a reference vehicle in response to detecting the incursion (operation **1500**).

In **Figure 16****,** an illustration of a flowchart of a process for performing an action in response to an incursion is depicted in accordance with an illustrative embodiment. This process can be implemented by a vehicle involved in the incursion. This vehicle can be an intruder vehicle that has caused or is predicted to cause an incursion.

The process changes a movement of an intruder vehicle in response to detecting the incursion (operation **1600**). The process terminates thereafter. This movement can be to move the vehicle off of the operations surface or move to avoid entering the operations surface.

When changing a movement of a vehicle in operation **1500** in **Figure 15** and in operation **1600** in **Figure 16****,** the change can be a preprogrammed behavior when the vehicle is for an unpiloted vehicle.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

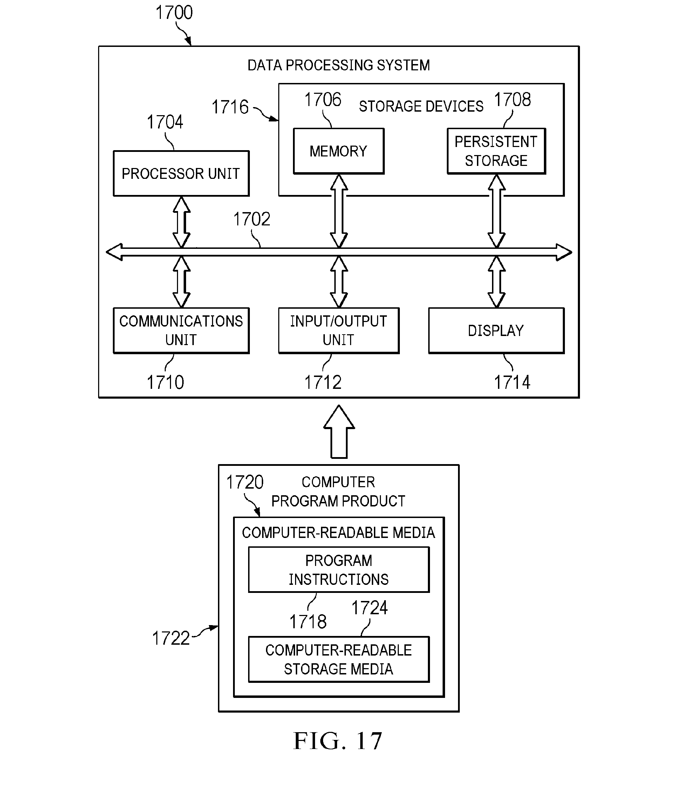

Turning now to **Figure 17****,** an illustration of a block diagram of a data processing system is depicted in accordance with an illustrative embodiment. Data processing system **1700** can be used to implement computer system **212** in **Figure 2****.** In this illustrative example, data processing system **1700** includes communications framework **1702,** which provides communications between processor unit **1704,** memory **1706,** persistent storage **1708,** communications unit **1710,** input/output (I/O) unit **1712,** and display **1714.** In this example, communications framework **1702** takes the form of a bus system.

Processor unit **1704** serves to execute instructions for software that can be loaded into memory **1706.** Processor unit **1704** includes one or more processors. For example, processor unit **1704** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1704** can be implemented using one or more heterogeneous processor systems in which a main processor is present with secondary processors on a single chip. As another illustrative example, processor unit **1704** can be a symmetric multi-processor system containing multiple processors of the same type on a single chip.

Memory **1706** and persistent storage **1708** are examples of storage devices **1716.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1716** may also be referred to as computer readable storage devices in these illustrative examples. Memory **1706,** in these examples, can be, for example, a random-access memory or any other suitable volatile or non-volatile storage device. Persistent storage **1708** may take various forms, depending on the particular implementation.

For example, persistent storage **1708** may contain one or more components or devices. For example, persistent storage **1708** can be a hard drive, a solid-state drive (SSD), a flash memory, a rewritable optical disk, a rewritable magnetic tape, or some combination of the above. The media used by persistent storage **1708** also can be removable. For example, a removable hard drive can be used for persistent storage **1708.**

Communications unit **1710,** in these illustrative examples, provides for communications with other data processing systems or devices. In these illustrative examples, communications unit **1710** is a network interface card.

Input/output unit **1712** allows for input and output of data with other devices that can be connected to data processing system **1700.** For example, input/output unit **1712** may provide a connection for user input through at least one of a keyboard, a mouse, or some other suitable input device. Further, input/output unit **1712** may send output to a printer. Display **1714** provides a mechanism to display information to a user.

Instructions for at least one of the operating system, applications, or programs can be located in storage devices **1716,** which are in communication with processor unit **1704** through communications framework **1702.** The processes of the different embodiments can be performed by processor unit **1704** using computer-implemented instructions, which may be located in a memory, such as memory **1706.**

These instructions are referred to as program instructions, computer usable program instructions, or computer readable program instructions that can be read and executed by a processor in processor unit **1704.** The program instructions in the different embodiments can be embodied on different physical or computer readable storage media, such as memory **1706** or persistent storage **1708.**

Program instructions **1718** are located in a functional form on computer readable media **1720** that is selectively removable and can be loaded onto or transferred to data processing system **1700** for execution by processor unit **1704.** Program instructions **1718** and computer readable media **1720** form computer program product **1722** in these illustrative examples. In the illustrative example, computer readable media **1720** is computer readable storage media **1724.**

Computer readable storage media **1724** is a physical or tangible storage device used to store program instructions **1718** rather than a medium that propagates or transmits program instructions **1718.** Computer readable storage media **1724** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SR_AM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer readable storage media **1724,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, defragmentation or garbage collection. However, these operations do not render the storage device as transitory because the data is not transitory while the data is stored in the storage device.

Alternatively, program instructions **1718** can be transferred to data processing system **1700** using a computer readable signal media. The computer readable signal media are signals and can be, for example, a propagated data signal containing program instructions **1718.** For example, the computer readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer readable media **1720"** can be singular or plural. For example, program instructions **1718** can be located in computer readable media **1720** in the form of a single storage device or system. In another example, program instructions **1718** can be located in computer readable media **1720** that is distributed in multiple data processing systems. In other words, some instructions in program instructions **1718** can be located in one data processing system while other instructions in program instructions **1718** can be located in one data processing system. For example, a portion of program instructions **1718** can be located in computer readable media **1720** in a server computer while another portion of program instructions **1718** can be located in computer readable media **1720** located in a set of client computers.

The different components illustrated for data processing system **1700** are not meant to provide architectural limitations to the manner in which different embodiments can be implemented. In some illustrative examples, one or more of the components may be incorporated in or otherwise form a portion of, another component. For example, memory **1706,** or portions thereof, may be incorporated in processor unit **1704** in some illustrative examples. The different illustrative embodiments can be implemented in a data processing system including components in addition to or in place of those illustrated for data processing system **1700.** Other components shown in **Figure 17** can be varied from the illustrative examples shown. The different embodiments can be implemented using any hardware device or system capable of running program instructions **1718.**

In these examples, program instructions **1718** can be program instructions for at least one of model generator **214** or incursion assessment system **250.** These program instructions can be run on a computer system to perform one or more of different operations described in the illustrative examples. As program instructions located on computer readable storage media **1724** in computer program product **1720** can be loaded onto one or more processor units in a computer system to perform one or more of the operations described for the different illustrative examples.

Thus, illustrative examples provide a method, apparatus, system, and computer program product for object identification. The subject identification performed budget incursions into an operations surface at an airport. In one illustrative example, an airport object location system comprises a number of vehicle location units, a sensor system, and a model generator. The number of vehicle location units is connected to a number of vehicles. The number of vehicle location units generate vehicle location information for the number of vehicles in an area including an operations surface at an airport and vehicle timestamps for the vehicle location information. The sensor system is connected to a reference vehicle. The sensor system is configured to generate sensor data for the area, wherein reference timestamps and reference location information are associated with the sensor data. The model generator is configured to correlate the vehicle location information for the vehicles with the sensor data using the vehicle timestamps, the reference location information, and the reference timestamps to form a dataset.

The different illustrative examples provide an ability to increase the amount of training data for use in training a machine learning model to form an incursion model that can detect or predict incursions into an operations surface at an airport. This operations surface can be a runway, a taxiway, or other area in an airport where aircraft may move. Further, the illustrative examples enable increasing the amount of data used to test and validate a computer vision model created to form an incursion model as compared to current techniques of collecting data.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Also disclosed herein are embodiments according to the following numbered clauses:
1. An airport object location system comprising:
   a number of vehicle location units connected to a number of vehicles, wherein the number of vehicle location units generate vehicle location information for the number of vehicles in an area including an operations surface at an airport and vehicle timestamps for the vehicle location information;
   an electro-optical sensor system connected to an aircraft, wherein the electro-optical sensor system is configured to generate a video comprising frames of the area, wherein reference timestamps and reference location information are associated with the frames in the video; and
   a model generator configured to correlate the vehicle location information for the vehicles with the frames in the video using the vehicle timestamps, the reference location information, and the reference timestamps to form a dataset.
2. The airport object location system of clause 1 or 2, wherein the model generator is configured to:
   train a machine learning model to detect incursions to a selected operations surface using the dataset to form an incursion model, wherein incursion model detects incursions in a selected area including the selected operations surface.
3. The airport object location system of any preceding clause, wherein the model generator is configured to:
   create a computer vision model to detect incursions to a selected operations surface; and
   test and validate the computer vision model using the dataset.
4. The airport object location system of any preceding clause further comprising:
   an incursion assessment system configured to:
   receive a current video for the selected area; and
   detect an incursion into the selected operations surface by a vehicle using the current video and the incursion model.
5. The airport object location system of clause 4, wherein the incursion assessment system is configured to:
   display the current video on a display system; and
   associate a graphical indicator with the vehicle in the current video displayed on the display system in response to detecting the incursion.
6. The airport object location system of any preceding clause, wherein the selected area is one of the areas at the airport, a different area at the airport, or another area at another airport.
7. The airport object location system of any preceding clause, wherein a vehicle location unit in the number of vehicle location units has a visibility in video that avoids recognition of the vehicle location unit by an incursion model created using the dataset.
8. The airport object location system of any preceding clause, wherein a vehicle location unit in the number of vehicle location units comprises:
   an antenna system that receives global positioning system signals, wherein the antenna system is configured to be removably attached to a vehicle, wherein the antenna system has a height of 8 inches or less from a surface of a roof of the vehicle; and
   a portable receiver connected to the antenna system, wherein the portable receiver processing the global positioning system signals are received by the antenna system to generate the vehicle location information in a form of global positioning system data and timestamps.
9. The airport object location system of clause 8, wherein the antenna system comprises a number of antennas configured to be removably attached to the roof of the vehicle.
10. The airport object location system of any preceding clause, wherein a vehicle location unit in the number of vehicle location units comprises:
   an antenna system that receives global positioning system signals, wherein the antenna system is configured to be removably attached to a dash of a vehicle; and
   a portable receiver connected to the antenna system, wherein the portable receiver processing the global positioning system signals received by the antenna system to generate the vehicle location information in a form of global positioning system data and timestamps.
11. The airport object location system of any preceding clause, wherein the aircraft is selected from a group comprising a commercial airplane, a passenger airplane, a cargo airplane; a tilt-rotor aircraft, a tilt wing aircraft, a vertical takeoff and landing aircraft, an unmanned aerial vehicle, a drone, an electric vertical takeoff and landing vehicle, and a personal air vehicle.
12. The airport object location system of any preceding clause, wherein the operations surface is selected from a group comprising a runway, a taxiway, a ramp, and a helipad.
13. An airport object location system comprising:
   a number of vehicle location units connected to a number of vehicles, wherein the number of vehicle location units generate vehicle location information for the number of vehicles in an area including an operations surface at an airport and vehicle timestamps for the vehicle location information;
   a sensor system connected to a reference vehicle, wherein the sensor system is configured to generate sensor data for the area, wherein reference timestamps and reference location information are associated with the sensor data; and
   a model generator configured to correlate the vehicle location information for the vehicles with the sensor data using the vehicle timestamps, the reference location information, and the reference timestamps to form a dataset.
14. The airport object location system of claim 13, wherein the model generator is configured to:
   train a machine learning model to assess incursions to a selected operations surface using the dataset to form an incursion model, wherein incursion model assesses incursions in a selected area including the selected operations surface.
15. The airport object location system of claim 13 or 14, wherein the model generator is configured to:
   create a computer vision model to detect incursions to a selected operations surface; and
   test and validate the computer vision model using the dataset.
16. The airport object location system of claim 14 or 15 further comprising:
   an incursion assessment system configured to:
   receive current sensor data for the selected area; and
   assess an incursion into the selected operations surface by a vehicle using the current sensor data and an incursion model created using the dataset.
17. The airport object location system of claim 16, wherein in assessing the incursion into the selected operations surface by the vehicle, the incursion assessment system is configured to:
   detect the incursion into the selected operations surface by the vehicle using the current sensor data and the incursion model.
18. The airport object location system of claim 16, wherein in assessing the incursion into the selected operations surface by the vehicle, the incursion model is configured to:
   predict that the incursion into the selected operations surface by the vehicle will occur using the current sensor data and the incursion model.
19. The airport object location system of any of claims 13 to 18, wherein the incursion model is selected from at least one of a machine learning model training using the dataset or a computer vision model.
20. The airport object location system of any of claims 16 to 19, wherein the incursion assessment system configured to:
   display the current sensor data on a display system; and
   associate a graphical indicator with the vehicle in the current sensor data displayed on the display system in response to detecting the incursion.
21. The airport object location system of any of claims 14 to 20, wherein the selected area is one of the area at the airport, a different area at the airport, or another area at another airport.
22. The airport object location system of any of claims 13 to 21, wherein the sensor data is selected from at least one of a video comprising frames, light detection and ranging data, or radar data.
23. The airport object location system of any of claims 13 to 22, wherein the sensor system is selected from at least one of an electro-optical sensor system, a light detection and ranging system, or a radar system.
24. The airport object location system of any of claims 13 to 23, wherein a vehicle location unit in the number of vehicle location units has a visibility in the sensor data that avoids recognition of the vehicle location unit by an incursion model trained using the dataset.
25. The airport object location system of any of claims 13 to 24, wherein a vehicle location unit in the number of vehicle location units is a portable localization data collection system.
26. The airport object location system of any of claims 13 to 25, wherein a localization generation unit in the number of vehicle location units comprises:
   an antenna system that receives global positioning system signals, wherein the antenna system is configured to be removably attached to a vehicle, wherein the antenna system has a height of 8 inches or less from a surface of a roof of the vehicle; and
   a portable receiver connected to the antenna system, wherein the portable receiver processing the global positioning system signals received by the antenna system to generate the vehicle location information in a form of global positioning system data and timestamps.
27. The airport object location system of claim 26, wherein the antenna system comprises multiple antennas configured to be removably attached to the roof of the vehicle.
28. The airport object location system of any of claims 13 to 27, wherein a localization generation unit in the number of vehicle location units comprises:
   an antenna system that receives global positioning system signals, wherein the antenna system is configured to be removably attached to a dash of a vehicle; and
   a portable receiver connected to the antenna system, wherein the portable receiver processing the global positioning system signals received by the antenna system to generate the vehicle location information in a form of global positioning system data and timestamps.
29. A method for detecting objects at an airport, the method comprising:
   generating vehicle location information for a number of vehicles in an area including an operations surface at an airport and vehicle timestamps for the vehicle location information using a number of vehicle location units connected to the vehicles;
   generating sensor data for the area using a sensor system connected to a reference vehicle;
   associating reference timestamps and reference location information to the sensor data, wherein the reference location information is for the reference vehicle; and
   correlating the vehicle location information for the vehicles with the sensor data using the vehicle timestamps, the reference location information, and the reference timestamps to form a dataset.
30. The method of claim 29 further comprising:
   training a machine learning model to assess incursions to a selected operations surface using the dataset to form an incursion model, wherein the incursion model assesses incursions by vehicles in a selected area including the selected operations surface.
31. The method of claim 30 further comprising:
   receiving current sensor data for the selected area from a new sensor system; and
   assessing an incursion into the selected operations surface by a vehicle using the current sensor data and the incursion model.
32. The method of claim 31, wherein assessing the incursion into the selected operations surface by the vehicle comprises:
   detecting the incursion into the selected operations surface by the vehicle using the current sensor data and the incursion model.
33. The method of claim 31, wherein assessing the incursion into the selected operations surface by the vehicle, the incursion model comprises:
   predicting that the incursion into the selected operations surface by the vehicle will occur using the current sensor data and the incursion model.
34. The method of any of claims 31 to 33 further comprising:
   changing a movement of an intruder vehicle in response to detecting the incursion.
35. The method of any of claims 31 to 34 further comprising:
   changing a movement of another reference vehicle in response to detecting the incursion.

## Claims

1. An airport object location system (202) comprising:
a number of vehicle location units (208) connected to a number of vehicles (220), wherein the number of vehicle location units (208) generate vehicle location information (222) for the number of vehicles (220) in an area (105, 226) including an operations surface (228) at an airport (107, 230) and vehicle timestamps (224) for the vehicle location information (222);
a sensor system (300) connected to a reference vehicle (232), wherein the sensor system (300) is configured to generate sensor data (234) for the area (105, 226), wherein reference timestamps (235) and reference location information (236) are associated with the sensor data (234); and
a model generator (214) configured to correlate the vehicle location information (222) for the vehicles (220) with the sensor data (234) using the vehicle timestamps (224), the reference location information (236), and the reference timestamps (235) to form a dataset (238).

2. The airport object location system (202) of claim 1, wherein the model generator (214) is configured to:
train a machine learning model (240) to assess incursions to a selected operations surface (242) using the dataset (238) to form an incursion model (244), wherein incursion model (244) assesses incursions in a selected area (243) including the selected operations surface (242); and optionally wherein the selected area (243) is one of the area (105, 226) at the airport (107, 230), a different area at the airport (107, 230), or another area at another airport..

3. The airport object location system (202) of claim 1 or 2, wherein the model generator (214) is configured to:
create a computer vision model (241) to detect incursions to a selected operations surface (242); and
test and validate the computer vision model (241) using the dataset (238).

4. The airport object location system (202) of claim 2 or 314 further comprising:
an incursion assessment system (250) configured to:
receive current sensor data (234) for the selected area (243); and
assess an incursion into the selected operations surface (242) by a vehicle (420) using the current sensor data (234) and an incursion model (244) created using the dataset (238).

5. The airport object location system (202) of claim 4, wherein in assessing the incursion into the selected operations surface (242) by the vehicle (420), the incursion assessment system (250) is configured to:
detect the incursion into the selected operations surface (242) by the vehicle (420) using the current sensor data (234) and the incursion model (244); or wherein in assessing the incursion into the selected operations surface (242) by the vehicle (420), the incursion model (244) is configured to:
predict that the incursion into the selected operations surface (242) by the vehicle (420) will occur using the current sensor data (234) and the incursion model (244).

6. The airport object location system (202) of claim 4 or 5, wherein the incursion assessment system (250) configured to:
display the current sensor data (234) on a display system (255); and
associate a graphical indicator with the vehicle in the current sensor data (234) displayed on the display system (255) in response to detecting the incursion.

7. The airport object location system (202) of any preceding claim, wherein the sensor data (234) is selected from at least one of a video (310) comprising frames (311), light detection and ranging data (320), or radar data (324); and/or wherein the sensor system (300) is selected from at least one of an electro-optical sensor system (301), a light detection and ranging system (302), or a radar system (304).

8. The airport object location system (202) of any preceding claim, wherein a vehicle location unit (400) in the number of vehicle location units (208) has a visibility in the sensor data (234) that avoids recognition of the vehicle location unit (400) by an incursion model (244) trained using the dataset (238); and/or wherein a vehicle location unit (400) in the number of vehicle location units (208) is a portable localization data collection system (401).

9. The airport object location system (202) of any preceding claim, wherein a localization generation unit in the number of vehicle location units (208) comprises:
an antenna system (410, 502) that receives global positioning system signals (509), wherein the antenna system (410, 502) is configured to be removably attached to a vehicle (420), wherein the antenna system (410, 502) has a height of 8 inches or less from a surface (421) of a roof (422) of the vehicle (420); and
a portable receiver (412) connected to the antenna system (410, 502), wherein the portable receiver (412) processing the global positioning system signals (509) received by the antenna system (410, 502) to generate the vehicle location information (222) in a form of global positioning system data (431) and timestamps (432); and optionally wherein the antenna system (410, 502) comprises multiple antennas (423) configured to be removably attached to the roof (422) of the vehicle (420) .

10. The airport object location system (202) of any of claims 1 to 8, wherein a localization generation unit in the number of vehicle location units (208) comprises:
an antenna system (410, 502) that receives global positioning system signals (509), wherein the antenna system (410, 502) is configured to be removably attached to a dash (425) of a vehicle (420); and
a portable receiver (412) connected to the antenna system (410, 502), wherein the portable receiver (412) processing the global positioning system signals (509) received by the antenna system (410, 502) to generate the vehicle location information (222) in a form of global positioning system data (431) and timestamps (432).

11. A method for detecting objects at an airport (107, 230), the method comprising:
generating (1000) vehicle location information (222) for a number of vehicles (220) in an area (105, 226) including an operations surface (228) at an airport (107, 230) and vehicle timestamps (224) for the vehicle location information (222) using a number of vehicle location units (208) connected to the vehicles (220);
generating (1002) sensor data (234) for the area (105, 226) using a sensor system (300) connected to a reference vehicle (232);
associating (1004) reference timestamps (235) and reference location information (236) to the sensor data (234), wherein the reference location information (236) is for the reference vehicle (232); and
correlating (10060 the vehicle location information (222) for the vehicles (220) with the sensor data (234) using the vehicle timestamps (224), the reference location information (236), and the reference timestamps (235) to form a dataset (238).

12. The method of claim 11 further comprising:
training (1100) a machine learning model (240) to assess incursions to a selected operations surface (242) using the dataset (238) to form an incursion model (244), wherein the incursion model (244) assesses incursions by vehicles (220) in a selected area (243) including the selected operations surface (242).

13. The method of claim 12 further comprising:
receiving (1200) current sensor data (234) for the selected area (243) from a new sensor system (300); and
assessing (1202) an incursion into the selected operations surface (242) by a vehicle (420) using the current sensor data (234) and the incursion model (244).

14. The method of claim 13, wherein assessing (1202) the incursion into the selected operations surface (242) by the vehicle (420) comprises:
detecting (1300) the incursion into the selected operations surface (242) by the vehicle (420) using the current sensor data (234) and the incursion model (244); or wherein assessing (1202) the incursion into the selected operations surface (242) by the vehicle, the incursion model (244) comprises:
predicting (1400) that the incursion into the selected operations surface (242) by the vehicle (420) will occur using the current sensor data (234) and the incursion model (244).

15. The method of claim 13 or 14 further comprising:
changing (1600) a movement of an intruder vehicle in response to detecting the incursion; or
changing a movement of another reference vehicle in response to detecting the incursion.
